# EUROPÄISCHE PATENTSCHRIFT

(11) **EP 0 914 902 B1**
(45) Veröffentlichungstag und Bekanntmachung des Hinweises auf die Patenterteilung: **12.12.2001**
(21) Anmeldenummer: 98120407.6
(22) Anmeldetag: 28.10.1998
(51) Int. Cl.: B23Q 11/10, B05B 15/06, F16N 7/34

(54) **Düsenvorrichtung**
Nozzle device
Dispositif à buse

(30) Priorität: 05.11.1997 DE 29719682 U
(43) Veröffentlichungstag der Anmeldung: 12.05.1999
(73) Patentinhaber: Link, Edmar, D-76228 Karlsruhe (DE)
(72) Erfinder: Link, Edmar, D-76228 Karlsruhe (DE)
(74) Vertreter: Liesegang, Roland, Dr.-Ing.

(56) Entgegenhaltungen:
- EP-A- 0 642 837
- EP-A- 0 734 780
- DE-A- 19 614 957
- GB-A- 2 249 499
- US-A- 3 421 702
- US-A- 4 195 692
- US-A- 5 186 394

## Beschreibung

Die Erfindung betrifft eine Minimalmengen-Kühlschmiervorrichtung mit den Merkmalen des Oberbegriffs des Anspruchs 1.

Eine bekannte Vorrichtung dieser Art (EP-A-642 837) verwirklicht zwar das Prinzip der Innenmischung von Druckgas und flüssigem Kühlschmiermittel in einer Mischkammer, läßt den Gemischstrahl jedoch ohne Maßnahmen zum Verhindern einer Vemebelung aus der Ausströmöffnung austreten.

Bei einer anderen bekannten Minimalmengen-Kühlschmiervorrichtung ist eine Düsenvorrichtung der oben beschriebenen Art am Ende einer Druckgas führenden Zuführleitung angebracht, in deren Innerem ein flexibler Kapillarschlauch zum dosierbaren Zuführen kleinster Mengen an Kühlschmiermittel zu der Düsenvorrichtung führt (EP 0 535 271 B1). Die Zuführleitung ist von einem biegsamen Metallgliederschlauch gebildet, der sich auf den zu kühlenden Ort, zum Beispiel einen Zerspanort einer Werkzeugmaschine, ausrichten läßt. Die Praxis hat gezeigt, daß eine derartige Vorrichtung nicht immer befriedigt. Durch Fremdeinwirkungen im Betrieb, wie Krafteinwirkungen durch vom Werkstück weggeschleuderte Späne, kann es auch bei anfänglicher richtiger Einstellung leicht zu Fehlausrichtungen der Düsenvorrichtung kommen. Dabei ist zu berücksichtigen, daß der Sprühstrahl von Minimalmengen-Kühlschmiervorrichtungen sehr fein ist, so daß schon kleinste Fehlausrichtungen zu einem Vorbeizielen des Sprühstrahls an dem zu kühlenden bzw. zu schmierenden Ort führen können.

Prinzipiell ist eine Minimalmengen-Kühlschmiervorrichtung mit einer Düsenvorrichtung mit Mischkammer in der DE 37 43 968 C1 beschrieben.

Der Erfindung liegt die Aufgabe zugrunde, eine Düsenvorrichtung für eine Minimalmengen-Kühlschmiervorrichtung zu schaffen, die unter Vermeiden von Fehlausrichtungen der Düsenvorrichtung ein genaues Richten des Gemischstrahles auf den zu kühlenden und zu schmierenden Ort erlaubt. Zur Lösung dieser Aufgabe dient Anspruch 1.

Gemäß der Erfindung ist ein die Ausströmöffnung aufweisender Düsenkörper schwenkeinstellbar in einem Düsenhalter angeordnet, der am Ende einer Zuleitung für Druckgas und Kühlschmiermittel angeordnet ist.

Vorzugsweise ist der Düsenkörper manuell einstellbar, beispielsweise durch Greifen mit den Fingern eines vom Düsenkörper vorkragenden Zapfens.

Um ein allseitiges Einstellen des Düsenkörpers in allen Richtungen zu ermöglichen, hat der Düsenkörper einen kugelig gewölbten Abschnitt, der in einer entsprechend teilkugeligen Aufnahme des Düsenhalters schwenkeinstellbar ist.

Um eine gewünschte Einstellung des Düsenkörpers im Düsenhalter dauerhaft aufrecht zu halten, kann der Düsenkörper mittels einer Klemmvorrichtung, wie einer Überwurfmutter, gegen den Düsenhalter feststellbar sein.

Die Erfindung ist im folgenden anhand schematischer Zeichnungen an Allsführungsbeispielen mit weiteren Einzelheiten näher erläutert. Es zeigen:
- Fig. 1:: Eine erste Ausführung einer Düsenvorrichtung gemäß der Erfindung;
- Fig. 2:: einen Schnitt wie Fig. 1 durch eine zweite Ausführung einer Düsenvorrichtung; und
- Fig. 3:: einen Schnitt wie Fig. 1 durch eine dritte Ausführung einer Düsenvorrichtung, wobei die Ausführungen nach den Figuren 2 und 3 nicht durch die Patentansprüche umfaßt sind.

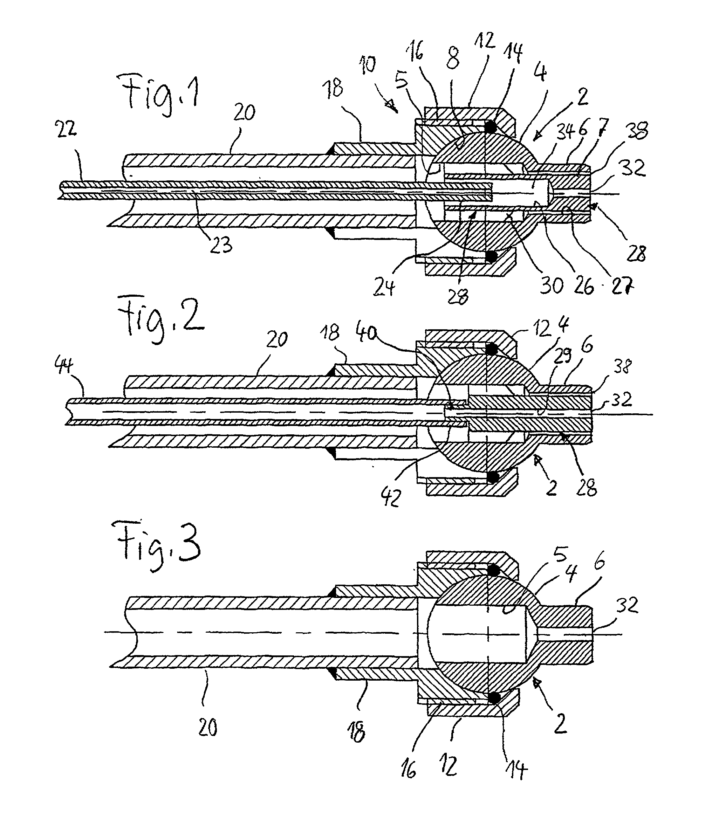

Für gleiche Teile sind in der folgenden Beschreibung der drei Ausführungen in Verbindung mit den Fig. 1 bis 3 gleiche Bezugszahlen verwendet

Eine Düsenvorrichtung für eine Minimalmengen-Kühlschmiervorrichtung umfaßt in allen drei Ausführungen einen Düsenkörper 2, der einen Kugelabschnitt 4 und einen davon vorkragenden Zapfenabschnitt 6 aufweist. Der Kugelabschnitt 4 ist in einer teilkugeligen Aufnahme 8 eines Düsenhalters 10 schwenkbar aufgenommen. Der Düsenkörper 2 ist mittels einer Überwurfmutter 12 unter Zwischenschaltung des abdichtenden O-Ringes 14 durch Festschrauben auf einem Außengewinde 16 des Düsenhalters 10 festklemmbar.

Der Düsenhalter 10 ist über einen Hals 18 auf dem Ende einer Zuleitung 20 für Druckgas befestigt, beispielsweise durch Verschweißen. Die Zuleitung 20 für Druckgas kann aus einem starren Metallrohr oder einem flexiblen Metall- oder Kunststoffrohr, beispielsweise aus einem Metallgliederrohr, bestehen, das in eine beliebige Richtung gebogen werden kann und in der jeweils gebogenen Richtung stehen bleibt

Bei der Ausführung nach Fig. 1 und 2 ist ein flexibler Kapillarschlauch 22 aus PTFE (Polytetrafluorethylen, Handelsname: Teflon) eines Durchmessers zwischen 0,3 und 1,0 mm durch die Zuleitung 20 mit Spiel durchgeführt. Der flexible Kapillarschlauch 22 ragt mit seinem düsenseitigen Ende 24 aus der Zuleitung 20 heraus mit Spiel in eine Senkbohrung 26 eines zylindrischen Einsatzes 28. Der zylindrische Einsatz 28 ist über Rippen 30 in einem Senkloch 5 des Düsenkörpers 2 fest unterstützt und erstreckt sich sowohl durch den größeren Teil des Kugelabschnittes 4 als auch durch den Zapfenabschnitt 6. An dem austrittsseitigen Ende des Einsatzes 28 ist eine Ausströmöffnung 32 vorgesehen, die mit der Senkbohrung 26 kommuniziert.

Zwischen dem Ende 24 des flexiblen Schlauches 22 und dem inneren Ende der Ausströmöffnung 32 ist eine Mischkammer 34 gebildet. In diese Mischkammer 34 dringt gemäß Fig. 1 durch die Zuleitung 20 zugeführtes Druckgas, vorzugsweise Druckluft, über den Spalt zwischen Einsatz 28 und innerem Ende 24 des flexiblen Schlauches 22 ein. Ferner dringt in diese Mischkammer 34 unter Förderdruck über die Bohrung 23 des Kapillarschlauches 22 gefördertes Kühlschmiermittel ein, so daß es zu einer innigen Vermischung dieser beiden Medien in der Mischkammer 34 kommt. Der Förderdruck des Kühlschmiermittels kann gleich groß wie der Gasdruck sein.

Zwischen dem Mantel 7 des zylindrischen Einsatzes 28 und einer Innenbohrung 27 des Zapfenabschnittes 6 besteht ein Ringspalt, der eine zweite Ausströmöffnung 38 bildet. Über diese zweite ringförmige Ausströmöffnung 38 strömt Druckgas aus, das den kegelförmig aus der zentralen Ausströmöffnung 32 austretenden Gemischstrahl bündelt.

Die Ausführung nach Fig. 2 unterscheidet sich von derjenigen nach Fig. 1 dadurch, daß eine Senkbohrung 26 und damit eine Mischkammer 34 im zylindrischen Einsatz 28 fehlt. Stattdessen hat der zylindrische Einsatz einen Nippel 40, auf den das Ende 42 eines flexiblen Schlauches 44 dicht aufschiebbar ist. Wenngleich nicht so gezeichnet kann auch dieser flexible Schlauch 44 ein Kapillarschlauch sein, der lediglich am Ende einen zum Aufschieben auf den Nippel 40 erweiterten Innendurchmesser hat. Im übrigen entspricht die Anordnung derjenigen nach Fig. 1 und ist nicht nochmals beschrieben.

Bei der Ausführung nach Fig. 2 wird über den flexiblen Schlauch 44 zugeführtes Schmiermittel über die Ausströmöffnung 32 ungemischt ausgestoßen. Eine Gemischbildung findet erst außerhalb des Zapfenabschnittes 6 und damit des Düsenkörpers 2 dadurch statt, daß über die ringförmige zweite Ausströmöffnung 38 austretendes Druckgas, wie Druckluft, auf den kegelförmigen Kühlschmiermittelstrahl auftrifft und diesen zerstäubt.

Bei der Ausführung nach Fig. 3 ist sowohl ein zylindrischer Einsatz im Düsenkörper 2 als auch ein flexibler Schlauch zur Zuführung von Kühlschmiermittel ganz weggelassen. Durch die Zuleitung 20 wird ein Gemisch aus Druckgas (Druckluft) und Kühlschmiermittel gefördert, das in einer nicht gezeigten Vormischstation vorgemischt ist. So tritt aus der Ausströmöffnung 32 des Düsenkörpers 2 am Ende des Zapfenabschnittes 6 ein feiner Strahl dieses Gemisches aus.

## Patentansprüche

1. Minimalmengen-Kühlschmiervorrichtung mit einer Düsenvorrichtung, der ein Kühlschmiermittel sowie Druckgas zugeführt wird, und die einen in einer Mischkammer (34) vorgemischten Gemichstrrhl aus dem Druckgas und dem Kühlschmiermittel über mindestens eine Ausstömöffnung (32,38) auf einen gewünschten Schmierort sprühen kann, wobei ein die Ausströmöffnung (32, 38) aufweisender Düsenkörper (2) schwenkeinstellbar in einem Düsenhalter (10) sitzt, **dadurch gekennzeichnet, daß** eine Zuführleitung (22) für Kühlschmiermittel durch eine Zuleitung (20) für Druckgas geführt ist und in den Düsenkörper (2) ausmündet, daß der Düsenkörper (2) einen zylindrischen Einsatz (28) enthaltend eine Senkbohrung (26) aufweist, in die ein offenes Ende (24) der Zuführleitung (22) mit Spiel hineinragt und deren eines Ende mit der Zuleitung (20) und deren anderes Ende mit der zentralen Ausströmöffnung (32) kommuniziert, daß die Mischkammer (34) in der Senkbohrung (26) zwischen dem offenen Ende (24) der Zuführleitung (22) und der Ausströmöffnung (32) ausgebildet ist und daß eine mit der Zuleitung (20) kommunizierende, koaxial mit der zentralen Ausströmöffnung (32) angeordnete ringförmige Ausströmöffnung (38) für Druckgas vorgesehen ist.

2. Minimalmengen-Kühlschmiervorrichtung nach Anspruch 1, **dadurch gekennzeichnet, daß** der Düsenkörper (2) einen Kugelabschnitt (4) hat, der in einer entsprechend teilkugeligen Aufnahme (8) des Düsenhalters (10) schwenkeinstellbar ist.

3. Minimalmengen-Kühlschmiervorrichtung nach Anspruch 1 oder 2, **dadurch gekennzeichnet, daß** der Düsenkörper (2) mittels einer lösbaren Klemmvorrichtung (12) gegen den Düsenhalter (10) feststellbar ist

4. Minimalmengen-Kühlschmiervorrichtung nach Anspruch 3, **dadurch gekennzeichnet, daß** die Klemmvorrichtung eine Überwurfmutter (12) ist, die unter Zwischenschaltung eines Dichtringes (14) mit dem Düsenhalter (10) verschraubbar ist.

5. Minimalmengen-Kühlschmiervorrichtung nach einem der Ansprüche 1 bis 4, **dadurch gekennzeichnet, daß** der Düsenkörper (2) einen die Ausströmöffnung (32, 38) aufweisenden, vorkragenden Zapfen (6) aufweist, über den der Düsenkörper manuell verschwenkbar ist.

6. Minimalmengen-Kühlschmiervorrichtung nach einem der Ansprüche 1 bis 5, **dadurch gekennzeichnet, daß** der Düsenhalter (10) am Ende der Zuleitung (20) für Druckgas angeordnet ist.

7. Minimalmengen-Kühlschmiervorrichtung nach einem der Ansprüche 1 bis 6, **dadurch gekennzeichnet, daß** die Zuführleitung für Kühlschmiermittel ein flexibler Kapillarschlauch (22) ist

8. Minimalmengen-Kühlschmiervorrichtung nach Anspruch 7, **dadurch gekennzeichnet, daß** der flexible Kapillarschlauch (22) aus Polytetrafluorethylen besteht

## Claims

1. A minimum-quantity cooling and lubricating device comprising a nozzle device supplied with a cooling lubricant and compressed gas and adapted to spray a jet of the mixture of compressed gas and the cooling lubricant, pre-mixed in a mixing chamber (34), through at least one outflow opening (32, 38) to a required place for lubricating, wherein a nozzle member (2) containing the outflow opening (32, 38) is pivotably adjustable in a nozzle holder (10), **characterised in that** a feed line (22) for cooling lubricant is guided through a feed line (20) for compressed gas and opens into the nozzle member (2), the nozzle member (2) containing a cylindrical insert (26) has a flush bore (26) into which an open end (24) of the feed line (22) projects with clearance and one end of which communicates with the feed line (20) and the other end with the central outflow opening (32), the mixing chamber (34) in the flush bore (26) is formed between the outflow opening (32) and the open end (24) of the feed line (22) and an annular outflow opening communicating with the feed line (20) and disposed coaxially with the central outflow opening (32) is provided for compressed gas.

2. A minimum-quantity cooling and lubricating device according to claim 1, **characterised in that** the nozzle member (2) has a spherical portion (4) which is adjustable by pivoting in a corresponding part-spherical recess (8) in the nozzle holder (10).

3. A minimum-quantity cooling and lubricating device according to claim 1 or 2, **characterised in that** the nozzle member (2) can be secured against the nozzle holder (10) by at least one releasable clamping device (12).

4. A minimum-quantity cooling and lubricating device according to claim 3, **characterised in that** the clamping device is a screw cap (12) which can be screwed to the nozzle holder (10) with interposition of a sealing ring (14).

5. A minimum-quantity cooling and lubricating device according to any of claims 1 to 4, **characterised in that** the nozzle member (2) has a projecting spigot (6) which comprises the outflow opening (32, 38) and can be used for manually pivoting the nozzle member.

6. A minimum-quantity cooling and lubricating device according to any of claims 1 to 5, **characterised in that** the nozzle-holder (10) is disposed at the end of the feed line (20) for compressed gas.

7. A minimum-quantity cooling and lubricating device according to any of claims 1 to 6, **characterised in that** the feed line for cooling lubricant is a flexible capillary tube (22).

8. A minimum-quantity cooling and lubricating device according to claim 7, **characterised in that** the flexible capillary tube (22) is of polytetrafluoro-ethylene.

## Revendications

1. Dispositif lubrifiant réfrigérant à doses minimales comportant un dispositif à buse, recevant un lubrifiant réfrigérant ainsi que du gaz comprimé, et pouvant pulvériser sur un endroit à lubrifier souhaité, par l'intermédiaire d'au moins une ouverture d'émission (32, 38), un jet résultant du mélange du gaz comprimé et du lubrifiant réfrigérant effectué dans une chambre de mélange (34), dans lequel un corps de buse (2) présentant l'ouverture d'émission (32, 38) est logé de façon orientable dans un support de buse (10), **caractérisé en ce qu'**une conduite (22) d'amenée de lubrifiant réfrigérant est guidée par une conduite (20) d'alimentation en gaz comprimé et débouche dans le corps de buse (2), **en ce que** le corps de buse (2) présente une partie cylindrique (28) comprenant un perçage (26) dans lequel une extrémité ouverte (24) de la conduite d'amenée (22) débouche avec du jeu, dont une extrémité communique avec la conduite d'alimentation (20) et dont l'autre extrémité communique avec l'ouverture centrale d'émission (32), **en ce que** la chambre de mélange (34) est formée dans le perçage (26) entre l'extrémité ouverte (24) de la conduite d'amenée (22) et l'ouverture d'émission (32), et **en ce qu'**une ouverture d'émission annulaire (38), coaxiale à l'ouverture centrale d'émission (32) et en communication, avec la conduite d'alimentation (20), est prévue pour le gaz comprimé.

2. Dispositif lubrifiant réfrigérant à doses minimales selon la revendication 1, **caractérisé en ce que** le corps de buse (2) comporte un segment sphérique orientable (4) dans un logement (8) en partie sphérique correspondant du support de buse (10).

3. Dispositif lubrifiant réfrigérant à doses minimales selon la revendication 1 ou 2, **caractérisé en ce que** le corps de buse (2) peut être fixé au support de buse (10) par un dispositif de serrage amovible (12).

4. Dispositif lubrifiant réfrigérant à doses minimales selon la revendication 3, **caractérisé en ce que** le dispositif de serrage est une colerette (12) pouvant être vissée au support de buse (10) avec interposition d'une bague d'étanchéité (14).

5. Dispositif lubrifiant réfrigérant à doses minimales selon l'une des revendications 1 à 4, **caractérisé en ce que** le corps de buse (2) présente un téton (6) disposé vers l'avant et comportant l'ouverture d'émission. (32, 38), par lequel le corps de buse est orientable manuellement.

6. Dispositif lubrifiant réfrigérant à doses minimales selon l'une des revendications 1 à 5, **caractérisé en ce que** le support de buse (10) est disposé à l'extrémité de la conduite (20) d'alimentation en gaz comprimé.

7. Dispositif lubrifiant réfrigérant à doses minimales selon l'une des revendications 1 à 6, **caractérisé en ce que** la conduite d'amenée de lubrifiant réfrigérant est un tube capillaire flexible (22).

8. Dispositif lubrifiant réfrigérant à doses minimales selon la revendication 7, **caractérisé en ce que** le tube capillaire flexible (22) est en polytétrafluoréthylène.
